# EUROPÄISCHE PATENTSCHRIFT

(11) **EP 3 995 359 B1**
(45) Veröffentlichungstag und Bekanntmachung des Hinweises auf die Patenterteilung: **17.04.2024**
(21) Anmeldenummer: 21195561.2
(22) Anmeldetag: 08.09.2021
(51) Int. Cl.: B60P 7/08

(54) **FUNKTIONSLEISTE ZUR ANORDNUNG AN LADERAUMINNENFLÄCHEN EINES KRAFTFAHRZEUGS**
FUNCTIONAL STRIP FOR ARRANGEMENT ON INTERNAL LOAD BEARING SURFACES OF A MOTOR VEHICLE
BAGUETTE FONCTIONNELLE DESTINÉE À ÊTRE AGENCÉE SUR LES SURFACES INTÉRIEURES DE L'ESPACE DE CHARGEMENT D'UN VÉHICULE AUTOMOBILE

(30) Priorität: 06.11.2020 DE 102020129289
(43) Veröffentlichungstag der Anmeldung: 11.05.2022
(73) Patentinhaber: Blomberger Holzindustrie GmbH, 32825 Blomberg (DE)
(72) Erfinder: KRAMPE, Bernd-Peter, 45731 Waltrop (DE); PANTOU, Anastasios, 32760 Detmold (DE)
(74) Vertreter: Kalkoff & Partner Patentanwälte mbB

(56) Entgegenhaltungen:
- WO-A1-2009/065529
- DE-A1-102011 087 363
- DE-A1-102016 115 404

## Beschreibung

Die Erfindung betrifft eine Funktionsleiste zur Anordnung an Laderauminnenflächen eines Kraftfahrzeugs, mit einem Profilträger und mindestens einem Leuchtmittelträger.

Bei Funktionsleisten der eingangs genannten Art handelt es sich um Montageschienen, die als Befestigungsprofil für Sperrmittel und Leuchtmittelapplikationen an den Innenflächen mobiler Laderäume, insbesondere in Bezug auf Kraftfahrzeuge und Lastkraftwagen, angeordnet werden. Eine derartige Montageschiene ist bereits aus der DE 10 2016 115 402 A1 bekannt. Dort wird eine Montageschiene offenbart, welche zum einen eine hinterschnittene Längsnut zur Anbringung von Fittings und zum anderen wenigstens eine Nebennut zur Befestigung von Leuchtmittelapplikationen aufweist. Der Aufbau der Längsnut ist im Stand der Technik bspw. auch aus dem Aufbau von Airlineschienen bekannt. Die Längsnut und die wenigstens eine Nebennut sind vorzugsweise parallel nebeneinander in einer Vorderseite der Montageschiene angeordnet, während die Hinterseite zur Befestigung der Montageschiene an einer Fläche ausgebildet ist. Die Nebennuten sind derart so ausgebildet, dass bspw. LED-Schienen als Leuchtmittelapplikation eingeklebt, oder kraftschlüssig in die Nebennut eingerastet werden können. Weiter ist bekannt, dass auch Gummiprofile in diese Nebennuten oder auch seitlich in separate Aufnahmeöffnungen angeordnet werden können. Solche Gummiprofile sollen die Kantbereiche der Montageschiene überdecken und den Anwender vor entsprechenden Stoßverletzungen schützen.

Aus der WO 2009/065529 A1 ist ferner eine Funktionsschiene für die Anordnung in einem Laderaum eines Kraftfahrzeugs bekannt. Die Funktionsschiene weist zwei längliche Randstege auf, welche voneinander in einer Breitenrichtung mittels eines Spalts getrennt ausgebildet sind. Dieser Spalt steht in Verbindung mit einer Hinterschneidung in Form einer Hohlkammer. In zumindest einem Wandungsabschnitt der Hohlkammer und/oder in zumindest einem der Randstege können Durchtritte angeordnet sein, zur Durchführung von Leuchtdioden. In dem Spalt kann weiter ein Funktionsschlitten gleitbeweglich gelagert angeordnet sein.

Montageschienen mit ähnlichem Anwendungsbereich finden sich insbesondere in der Ausrüstung von Transportfahrzeugen in der Logistik und dienen der Anordnung von Sperrmitteln zur Ladungssicherung und/oder zur Beleuchtung der entsprechenden Laderäume.

Montageschienen der bereits bekannten Art weisen eine geringe Anpassbarkeit an die Topologie von Laderauminnenflächen auf. Dementsprechend stehen die biegesteifen Montageschienen nach der Anbringung an solche vorgenannten Flächen häufig unter Spannung. Dem entgegen steht jedoch, dass für eine qualitativ hochwertige Ladungssicherung die entsprechenden Sperrmittel besonders bevorzugt durch keine überflüssigen Zusatzbeanspruchungen belastet sein sollten. Überdies hat sich die Anordnung von Leuchtmittelapplikationen gleichgerichtet mit den Aufnahmeöffnungen für die Sperrmittel aufgrund einer erhöhten Blendwirkung des Anwenders als besonders nachteilig erwiesen.

Der Erfindung liegt daher die Aufgabe zugrunde, eine Funktionsleiste vorzuschlagen, welche flexibel und anwenderfreundlich, gleichzeitig aber trotzdem in hohem Maße belastbar ist.

Die Erfindung löst die Aufgabe durch eine Funktionsleiste gemäß Anspruch 1 mit einem Profilträger gemäß Anspruch 12 und einem Leuchtmittelträger nach Anspruch 14. Die abhängigen Ansprüche beziehen sich auf vorteilhafte Ausführungsformen.

Die erfindungsgemäße Funktionsleiste zur Anordnung an Laderauminnenflächen eines Kraftahrzeugs weist einen Profilträger mit einem Anschlussabschnitt und einer abschnittsweise zur Abstützung an der Laderauminnenfläche ausgebildeten Rückseite, sowie mindestens einen Leuchtmittelträger zur Anordnung von Leuchtmitteln auf. Im Rahmen der Erfindung wird unter einem Profilträger bspw. eine längliche und sich dementsprechend entlang einer Längsachse erstreckende profilierte Befestigungsschiene, ähnlich einer Airlineschiene, verstanden. Zusätzlich zur Rückseite kann der Profilträger eine dieser gegenüberliegende Oberseite aufweisen. Die Oberseite kann in dem Zusammenhang bspw. den Großteil der Profilierung des Profilträgers aufweisen. Die Rückseite kann bzgl. der vorgenannten Abstützung bspw. abschnittsweise eben ausgebildet sein. Überdies ist es denkbar, dass die Rückseite an die Form der entsprechenden Laderauminnenfläche angepasst ist.

Erfindungsgemäß ist der Anschlussabschnitt des Profilträgers zudem zur Anordnung von Sperrmitteln für die Ladungssicherung ausgebildet. Der Anschlussabschnitt kann diesbezüglich bspw. als eine Mehrzahl an Öffnungen und/oder Vertiefungen verstanden werden. Damit kann der Anschlussabschnitt bspw. für die Anordnung bzw. die Aufnahme von Zurrösen und/oder -ringen und/oder speziellen Fittings geeignet sein, mit welchen z.B. die Anordnungen von Sperrmitteln wie bspw. Ladebalken, Sperrstangen, Sperrbalken o.ä. möglich ist.

Der erfindungsgemäße Profilträger weist überdies zusätzlich Verbindungsmittel zur Verbindung mit einem Leuchtmittelträger auf. Unter einem Verbindungsmittel kann bspw. ein Teil eines verbindungstechnischen Paares, wie bspw. Haken und Öse, Nut und Feder oder auch ein paar Rastnasen sein. Es kann also bspw. das Verbindungsmittel ein Teil einer male/female Verbindung sein.

Erfindungsgemäß weist weiter der Leuchtmittelträger einen Verbindungsabschnitt mit zumindest einem Kopplungselement und einer Abstützung, sowie einen Leuchtmittelabschnitt zur Aufnahme von zumindest einem Leuchtmittel auf. Das Kopplungselement kann im Rahmen der Erfindung bspw. derart ausgebildet sein, dass es zur Verbindung mit den Verbindungsmitteln des entsprechenden Profilträgers geeignet ist. Somit kann der Verbindungsabschnitt im Bereich des Kopplungselements bspw. entsprechende Gegenstücke zu den beispielhaft vorgenannten Verbindungsmitteln des Profilträgers aufweisen. Ist das zu dem Kopplungselement korrelierende Verbindungsmittel bspw. als female-Verbindungsteil ausgebildet, kann das Kopplungselement entsprechend als dazu passendes male-Verbindungsteil ausgebildet sein, vice versa. Die Abstützung kann punktförmig, linienförmig oder auch flächig erfolgen.

Kennzeichnend für die erfindungsgemäße Funktionsleiste ist, dass die Abstützung des Leuchtmittelträgers an zumindest einem Teil des Profilträgers anliegt, und das an dem Verbindungsabschnitt angeordnete Kopplungselement derart mit dem Profilträger in Wirkverbindung befindlich ist, dass das Kopplungselement mit den Verbindungsmitteln den Leuchtmittelträger an den Profilträger lösbar festlegt. Im Rahmen der Erfindung kann unter einer Wirkverbindung ein lösbarer, insbesondere ein manuell lösbarer, konstruktiver bzw. mechanischer Zusammenschluss des Leuchtmittelträgers mit dem Profilträger verstanden werden. Beispiele für eine Wirkverbindung können mitunter ein Ineinandergreifen und/oder ein kraftmäßig bspw. klemmender Zusammenschluss von Kopplungselement und korrelierendem Verbindungsmittel sein.

Die erfindungsgemäße Funktionsleiste zur Anordnung an einer Laderauminnenfläche eines Kraftfahrzeugs weist eine erhöhte Flexibilität und Funktionalität auf. Der modulare Aufbau von Profilträger und Leuchtmittelträger ermöglicht einen schnellen Leuchtmittelwechsel. Zudem bietet der Leuchtmittelabschnitt gegenüber dem Profilträger eine Pufferzone, welche Verletzungen bei der Bedienung bzw. der Anordnung von Sperrmitteln vorbeugen kann. Gegenüber bekannten Varianten von Befestigungsschienen weist sich die erfindungsgemäße Funktionsleiste als vorteilhaft aus.

Der Profilträger kann bevorzugt eine Mittelachse parallel zu seiner Längsachse aufweisen, welche zugleich auch eine Spiegelachse darstellt. Besonders bevorzugt ist der Anschlussabschnitt mittig entlang der vorgenannten Mittelachse angeordnet. Es ist dabei jedoch möglich, dass sich der Anschlussabschnitt nur abschnittsweise über die Länge des Profilträgers erstreckt.

Wie vorangehend beschrieben, kann der Anschlussabschnitt bevorzugt als Mehrzahl an Öffnungen und/oder Vertiefungen ausgebildet sein, wobei diese bevorzugt in der Oberseite des Profilträgers gleichmäßig voneinander beabstandet entlang der Längsachse angeordnet sind. Die Öffnungen und/oder Vertiefungen können bspw. jeweils einen runden Querschnitt aufweisen. Ebenfalls denkbar sind dahingehend jedoch auch bspw. ovale oder polygonale Querschnitte.

Der Anschlussabschnitt kann sich also insbesondere ausgehend von der Oberseite zumindest abschnittsweise in Richtung der Rückseite, also durch die Dicke des Profilträgers hindurch erstrecken, wobei die Dicke des Profilträgers damit als der maximale Abstand von Ober- und Rückseite angenommen werden kann. Diese bspw. Öffnungen und/oder Vertiefungen können zudem zusätzlich eine Hinterschneidung in Form einer Nut aufweisen. Die Hinterschneidung ist entsprechend im Bereich der Rückseite angeordnet.

Der Profilträger weist an der Oberseite weiter bevorzugt quer zur Längsrichtung beidseits den Anschlussabschnitt einrahmend jeweils einen Randbereich auf. Die Randbereiche können zudem jeweils an dem von dem Anschlussabschnitt abgewandten Ende im Wesentlichen direkt in die Rückseite des Profilträgers übergehen.

Der ebene Abschnitt der Rückseite ist bevorzugt zur flächigen Anlage an eine bspw. Laderauminnenfläche ausgebildet. Es ist möglich, dass dieser ebene Abschnitt eine Topologie bzw. ein Muster oder eine Prägung o.ä. aufweist und trotzdem die vorgenannte Anforderung zur flächigen Anlage erfüllt.

Um dann Sperrmittel wie bspw. Sperrbalken in einem solchen Laderaum anzuordnen werden Funktionsleisten insbesondere paarweise an sich gegenüberliegenden Laderauminnenflächen angeordnet, so dass jeweils eine Funktionsleiste ein Endstück eines der beispielhaft vorgenannten Sperrmitteln aufnimmt. Der Anschlussabschnitt ist dabei bevorzugt derart ausgebildet, dass ein daran angeordnetes Sperrmittel horizontal oder vertikal ausgerichtet ist. Besonders bevorzugt ist jedoch zumindest der Winkel zwischen der Längsachse des Profilträgers und dem sich von diesem wegerstreckenden Sperrmittel zumindest annähernd 90°.

In einer Normalansicht auf einen Schnitt quer zur Längsachse des Profilträgers ist der ebene Abschnitt der Rückseite, ebenso wie der Anschlussabschnitt in der Oberseite, besonders bevorzugt mittig angeordnet. Die Verbindungsmittel sind bevorzugt beidseitig und besonders bevorzugt beidseitig gleich beabstandet zur Mittelachse in der Rückseite angeordnet. Die Verbindungsmittel sind bspw. Öffnungen, Ausnehmungen, Rastflächen, Haltenasen o.ä., welche bspw. eine rastende und/oder klemmende Kraftschlussverbindung und/oder ein formschlüssiges Ineinandergreifen des Profilträgers mit den Leuchtmittelträgern ermöglichen. Es ist zudem denkbar, dass bspw. zusätzlich oder aber auch alternativ zu einer formschlüssigen Aufnahme des Leuchtmittelträgers an dem Profilträger, diese an den sich damit ergebenden Kontaktflächen überdies stoffschlüssig, also bspw. per Klebung, oder aber durch die Anordnung von Magnetelementen miteinander verbunden sind.

Der Profilträger wird besonders bevorzugt aus einem stabilen Werkstoff mit hoher Elastizitätsgrenze bei gleichzeitig hoher Dehnungsamplitude erzeugt. Der Profilträger kann dabei bevorzugt strangartig, besonders bevorzugt strangpressend oder extrudierend, urgeformt werden. Es ist zudem denkbar, dass der Profilträger aus einem Guss, bspw. als Druckguss oder gesintert hergestellt wird.

Der Leuchtmittelträger erstreckt sich bevorzugt ebenfalls länglich entlang einer Längsachse, wobei die Längsachse der Leuchtmittelträger und die Längsachse des entsprechenden Profilträgers einer Funktionsleiste besonders bevorzugt parallel ausgerichtet sind. Die entsprechende Länge eines Profilträgers kann zudem im Wesentlichen mit der Länge der dazugehörigen Leuchtmittelträger übereinstimmen. Besonders bevorzugt können an einem Profilträger seitlich parallel zu dessen Längsachse jeweils ein Leuchtmittelträger, also pro Profilträger bspw. zwei Leuchtmittelträger, angeordnet werden.

Der Leuchtmittelabschnitt ist bevorzugt derart an der Abstützung des Verbindungsabschnitts angeordnet, dass im Falle einer Verbindung des Leuchtmittelträgers mit dem Profilträger, der Leuchtmittelabschnitt dem entsprechenden Randbereich des Profilträgers an der Abstützung gegenüberliegt. Besonders bevorzugt ist der Leuchtmittelabschnitt einstückig mit dem Verbindungsabschnitt ausgebildet. Es ist jedoch möglich, dass der Leuchtmittelabschnitt mit dem Verbindungsabschnitt reversibel verbunden ist. Dann ist es bspw. möglich, dass der Verbindungsabschnitt eine Basis des Leuchtmittelträgers bildet, welcher bspw. ständig mit dem Profilträger verbunden ist, während der Leuchtmittelabschnitt bspw. im Zuge einer Wartung oder beim Wechsel eines Leuchtmittels ausgetauscht werden kann. Dazu können die Abstützung des Verbindungsabschnitts und der Leuchtmittelabschnitt im entsprechenden Kontaktbereich Mittel zur zerstörungsfrei trennbaren Verbindung, wie bspw. Clips, Magnetelemente, Rastnasen, Dual-Lock Klettband o.ä. aufweisen.

Der Leuchtmittelabschnitt kann überdies besonders bevorzugt entsprechende Mittel zur Aufnahme bzw. Anordnung von Leuchtmitteln aufweisen. Solche können bspw. als Öffnungen, Haltenasen oder als Ausnehmungen ausgebildet sein. Ebenfalls ist eine Kombination mit Verbindungstechniken denkbar. So können bspw. in dem Leuchtmittelabschnitt Öffnungen vorgesehen sein, welche Gewinde oder Steckmechanismen zur Anordnung entsprechender Leuchtmittel aufweisen. Ebenfalls ist es denkbar, dass ein Leuchtmittel in eine dafür vorgesehene Ausnehmung eingeklebt oder rastend eingesteckt wird. Dementsprechend können Leuchtmittel in verschiedenen Formen bzw. Fassungen an dem Leuchtmittelabschnitt angebracht werden, wobei bevorzugt strangartig ausgebildete Leuchtmittel benutzt werden können. Entsprechend der wie vorgenannt bevorzugt länglichen Ausbildung des Profilträgers bzw. der Leuchtmittelträger können weiter auch die Leuchtmittel bevorzugt länglich ausgebildet sein. Die Länge des Leuchtmittels kann dabei jedoch von der entsprechenden Länge des jeweils dazugehörigen Leuchtmittelträgers abweichen. So ist es denkbar, dass eine Mehrzahl kürzerer Leuchtmittel abschnittsweise an einem korrespondierenden Leuchtmittelträger angeordnet werden.

Gemäß einer bevorzugten Ausführungsform weist der Leuchtmittelträger zur Abstützung eine Anlagefläche auf, an welcher zumindest ein Teil des Profilträgers, insbesondere formfolgend, anliegt. Unter formfolgend kann bspw. verstanden werden, dass die Anlagefläche und der Teil des Profilträgers an welchem die Anlagefläche anliegt zumindest abschnittsweise eine deckungsgleiche Form aufweisen, also zumindest abschnittsweise flächig aneinander und/oder aufeinander liegen. Überdies kann diese Kontaktierung im Rahmen der Erfindung derart ausgebildet sein, dass dann zugleich Verbindungsmittel und Kopplungselement in einem ausreichend nahen Bereich beieinander angeordnet sind, dass eine Verbindung dieser möglich ist. Die Anlagefläche kann entsprechend bevorzugt formfolgend an einem der vorgenannten Randbereiche der Oberseite des Profilträgers anliegen. Es ist dabei möglich, dass die Anlagefläche nur an einem Teilabschnitt des Randbereichs anliegt. Dahingegen ist aber ebenfalls denkbar, dass die Anlagefläche und der entsprechende Randbereich derart kongruent aneinander anliegen, dass die entsprechende Anlagefläche in einem Endbereich genau in den an den vorgenannten Randbereich angrenzenden Anschlussabschnitt übergeht.

Um zu gewährleisten, dass die Verbindung zwischen dem Leuchtmittelträger und dem Profilträger hohen Beanspruchungen stand hält kann es vorteilhaft sein, eine Verbindungsart zu wählen, welche sowohl Querkräften als auch Zug sicher standhält. Zugfestigkeit kann insbesondere dann vorteilhaft sein, wenn die Funktionsleiste in Deckenbereichen von Laderäumen angeordnet ist. Gemäß einer weiteren bevorzugten Ausführungsform ist daher das Kopplungselement als sich von dem Verbindungsabschnitt weg erstreckend und zumindest ein Verbindungsmittel als dazu korrelierende Ausnehmung ausgebildet, so dass das Kopplungselement mit zumindest einem Verbindungsmittel in Eingriff steht. Insbesondere ist es damit möglich, dass ein zum Eingriff miteinander ausgebildetes Paar aus korrelierendem Kopplungselement und Verbindungsmittel als male/female-Verbindung ausgebildet ist. Solche male-female-Verbindungen können insbesondere als Steckelement mit Aufnahmeelement wie z.B. Klinke und Buchse, Feder und Nut, Haken und Öse, Rastclips o.ä. ausgebildet sein. Es ist jedoch ebenso denkbar, dass die Rollen vertauscht sind, also das Kopplungselement als Vertiefung bzw. Ausnehmung und das entsprechende Verbindungsmittel als Erhebung bzw. als sich von dem Profilträger weg erstreckendes Element ausgebildet ist.

Zur Sicherung der Verbindung von Leuchtmittelträger und Profilträger kann es zudem vorteilhaft sein, dass der Leuchtmittelträger zusätzlich derart an dem Profilträger angeordnet ist, dass dieser bereits durch seine Anformung an den Querschnitt des Profilträgers sich zumindest teilweise selbst gegenüber potentiell lösenden Kräften sichert. Gemäß einer weiteren bevorzugten Ausführungsform sind die Verbindungsmittel in der Rückseite des Profilträgers angeordnet und der Verbindungsabschnitt untergreift den Profilträger zumindest im Bereich des Kopplungselements derart, dass das Kopplungselement mit dem Verbindungsmittel im Eingriff befindlich ist. Damit wird der Leuchtmittelträger bspw. bei der Anordnung einer Deckenfläche bereits behelfsmäßig vor Herunterfallen geschützt und die Verbindung noch aufgewertet. Zugleich kann die Anlagefläche des Verbindungsabschnitts bevorzugt an einem der beiden Randbereiche der Oberseite des Profilträgers anliegen. Bei einer Verbindung des Leuchtmittelträgers mit dem Profilträger steht der Verbindungsabschnitt des Leuchtmittelträgers entsprechend bevorzugt sowohl mit der Oberseite als auch mit der Rückseite des Profilträgers in Kontakt. Der Verbindungsabschnitt kann den Profilträger daher insbesondere seitlich, also aus einer Querrichtung quer zur Längsachse und quer zur Dicke des Profilträgers, umgreifen. Bevorzugt ist das Kopplungselement dabei derart an dem den Profilträger untergreifenden Teil des Verbindungsabschnitts ausgebildet, dass das Kopplungselement der Anlagefläche zugewandt ist.

Wie vorangehend beschrieben wurde kann der Verbindungsabschnitt des Leuchtmittelträgers den Profilträger bevorzugt seitlich quer zur Längsachse untergreifen, wobei Kopplungselement und Verbindungsmittel dabei im Bereich der Rückseite des Profilträgers miteinander im Eingriff stehen. Um nun eine standfeste, sichere und anwenderfreundliche Montage der Funktionsleiste an einer Laderauminnenfläche zu ermöglichen, kann es vorteilhaft sein, dass die Funktionsleiste nicht nur mit dem den Profilträger untergreifenden Verbindungsabschnitt an bspw. einer zur Anbringung gedachten Laderauminnenfläche aufliegt. Gemäß einer weiteren bevorzugten Ausführungsform weist der Profilträger daher einen an die Rückseite angrenzenden Fußabschnitt auf, der mit den in Eingriff befindlichen Kopplungselementen der Verbindungsabschnitte der anliegenden Leuchtmittelträger eine im Wesentlichen ebene Grundfläche bildet. Es ist möglich, dass der Fußabschnitt eine Prägung oder ein Muster aufweist, welches zur Steigerung der Haftreibung an bspw. einer anliegenden Laderauminnenfläche ausgebildet ist.

Es kann vorteilhaft sein, dass die Leuchtmittel bspw. zum Schutz vor schädlicher mechanischer Einwirkung von dem Leuchtmittelträger bzw. dem Leuchtmittelabschnitt umschlossen sind. Zudem kann es weiter vorteilhaft sein, entsprechende Leuchtmittel über die vollständige Länge des Leuchtmittelträgers anzuordnen und entsprechend eine möglichst große Ausleuchtung des Ladeinnenraums zu ermöglichen. Daher kann gemäß einer bevorzugten Ausführungsform der Leuchtmittelabschnitt des Leuchtmittelträgers zur Aufnahme zumindest eines als Leuchtmittel ausgebildeten Leuchtmittelstreifens als Hohlprofil ausgebildet sein. Der Leuchtmittelabschnitt kann entsprechend einen Innenraum aufweisen, so dass der Leuchtmittelstreifen in den Leuchtmittelabschnitt insbesondere eingelegt oder eingeschoben werden können. Es ist möglich, dass in einem Leuchtmittelabschnitt mehr als ein Leuchtmittelstreifen jeweils über die ganze Länge des Leuchtmittelträgers, oder mehrere Leuchtmittelstreifen jeweils abschnittsweise in den Leuchtmittelabschnitt eingebracht werden.

Es kann überdies vorteilhaft sein, die bspw. Leuchtmittelstreifen in dem Leuchtmittelabschnitt zu befestigen. Insbesondere da die Funktionsleiste bevorzugt zur Anordnung an Laderauminnenflächen von (Last-)Kraftfahrzeugen genutzt werden kann, kann eine Befestigung der Leuchtmittel einerseits zur Sicherheit und andererseits zu geringeren Wartungsintervallen beitragen, da es andernfalls aufgrund der vorgenannten Mobilität des bevorzugten Anwendungsbereichs bspw. zum Verrutschen, Verdrehen oder anderen Positions- bzw. Ausrichtungsänderungen des Leuchtmittels kommen kann. Gemäß einer weiteren bevorzugten Ausführungsform weist der Leuchtmittelabschnitt des Leuchtmittelträgers daher zur lösbaren Arretierung der Leuchtmittelstreifen ausgebildete Haltemittel, insbesondere Rastvorsprünge, auf. Um eine einfache Austauschbarkeit der Leuchtmittelstreifen zu gewährleisten erweist sich die Benutzung reversibler Verbindungsmethoden zudem als vorteilhaft. Wie vorgenannt können dies bspw. für eine kraftschlüssige Halterung Rastvorsprünge, für eine formschlüssige Aufnahme aber auch einfache Haltenasen darstellen. Dabei kann der Leuchtmittelabschnitt z.B. derart ausgebildet sein, dass er endseitig quer zur Längsachse Einschuböffnungen aufweist und/oder öffenbar ist, so dass ein Leuchtmittelstreifen eingeschoben und mit den vorgenannten Haltemitteln in Eingriff gebracht werden kann.

Wird die Funktionsleiste bspw. an einer Laderaumdecke angebracht, so kann es bspw. zum Schutz vor einer Blendwirkung eines Anwenders vorteilhaft sein, wenn die Leuchtmittel Lichtstrahlen nicht lotrecht emittieren. Gemäß einer weiteren bevorzugten Ausführungsform sind die Leuchtmittelstreifen daher in dem Leuchtmittelabschnitt winklig angeordnet. Die in dem Leuchtmittelabschnitt angeordneten Haltemittel weisen dazu bspw. eine Grundfläche auf, auf welcher der Leuchtmittelstreifen abgelegt und dabei ggf. von den entsprechenden Haltemitteln gehalten wird. Die Grundfläche ist dabei jedoch winklig angeordnet zu derjenigen Richtung, in welcher sich bspw. eine in dem Anschlussabschnitt angeordnete Sperrstange erstrecken würde, also bevorzugt orthogonal zur jeweils direkt benachbarten ebenen Rückseite des Profilträgers. Die Leuchtmittelstreifen können dann in einem Winkel von bevorzugt 10° - 75°, besonders bevorzugt 20° - 60°, ganz besonders bevorzugt 30° - 50° bzgl. der vorgenannten Orthogonalen angeordnet sein, wobei die Leuchtmittelstreifen dabei besonders bevorzugt von dem Profilträger weg zeigen.

Für eine einfache und sichere Anlage des Leuchtmittelträgers über die Anlagefläche an einen der Randbereiche des Profilträgers kann es vorteilhaft sein, wenn die sich kontaktierenden Flächen abgerundet sind. Damit kann zudem eine flache und entsprechend raumsparende Bauform der Funktionsleiste gewährleistet werden, da bspw. der Übergang der Oberseite des Profilträgers zur Rückseite stetig über eine abnehmende Dicke des Profilträgers erfolgen kann. Somit entstehen auch keine unnötigen kantigen Seitenflächen bei einer polygonalen, bspw. im Wesentlichen rechteckigen Querschnittsform des Profilträgers, was ebenfalls zur Verletzungsvermeidung beiträgt. Daher sind gemäß einer weiteren bevorzugten Ausführungsform die Oberseite des Profilträgers und die entsprechende Anlagefläche des Leuchtmittelträgers bogenförmig ausgebildet. Bevorzugt sind die vorgenannten sich kontaktierenden Flächen in einer Querschnittansicht entlang der Längsachse jeweils klothoidal ausgebildet. Es ist jedoch auch möglich, dass es sich dabei um einen Kreisabschnitt oder eine unregelmäßig bzw. wellenförmig gebogene Kurvenform mit wechselnden Hoch- und/oder Tiefpunkten handelt.

Wie vorangehend beschrieben kann es vorteilhaft sein, wenn der Anschlussabschnitt zur Anordnung von Sperrmitteln über entsprechende Befestigungsmittel verfügt. Zudem kann es ebenfalls vorteilhaft sein, dass lediglich der Profilträger über zusätzliche Mittel zur Befestigung der Funktionsleiste an bspw. einer Laderauminnenfläche verfügt, da der Profilträger das zentrale Element darstellt, an dessen Ausgestaltung sich auch die Ausgestaltung der anliegenden Leuchtmittelträger orientiert. Gemäß einer weiteren bevorzugten Ausführungsform weist der Anschlussabschnitt daher Aufnahmeöffnungen auf, wobei die Aufnahmeöffnungen wiederum eine als Hinterschneidung ausgebildete Längsnut aufweisen, und wobei im Bereich einer jeweiligen Aufnahmeöffnung zumindest eine dazu korrespondierende, und auch den Fußabschnitt durchdringende Grundbohrung in der Längsnut angeordnet ist. Die Anschlussöffnungen können bevorzugt entsprechend den vorstehenden Erklärungen zu Öffnungen als Verbindungsmittel von der Oberseite direkt in Richtung der Rückseite ausgebildet sein. Sie können bevorzugt rund, besonders bevorzugt oval ausgebildet sein. Eine kreisrunde oder aber polygonale Ausbildung ist ebenfalls denkbar. Bevorzugt können die voneinander in Richtung der Längsachse voneinander beabstandeten und aufgereihten Anschlussöffnungen durch zwischenliegende Ausnehmungen miteinander verbunden sein. Es ist zudem denkbar, dass bspw. im Falle kreisrunder Aufnahmeöffnungen, der Durchmesser der Aufnahmeöffnungen über die Länge des Profilträgers zumindest abschnittsweise voneinander abweicht. Jedoch wäre dabei ein einheitlicher Durchmesser ebenfalls möglich.

Die Längsnut ist bevorzugt parallel zur Längsachse des Profilträgers ausgerichtet. Zudem kann die Längsnut bevorzugt über die vollständige Länge des Profilträgers ausgebildet sein. Die Ausgestaltung des Profilträgers kann somit zumindest hinsichtlich des Anschlussabschnitts mit der Ausgestaltung von Airlineschienen teilweise verglichen werden.

Die Grundbohrungen verlaufen bevorzugt in derselben Richtung, also parallel zu der Dicke des Profilträgers, wie die Aufnahmeöffnungen. Die Grundbohrungen können entsprechend derart ausgebildet sein, dass der Profilträger bzw. die Funktionsleiste dadurch bspw. an die entsprechende Laderauminnenfläche angeschraubt und entsprechend kraftschlüssig befestigt werden kann. Die Grundbohrungen weisen bevorzugt einen runden Querschnitt auf, wobei der Durchmesser einer Grundbohrung bevorzugt kleiner ist als die charakteristische Länge des Querschnitts der korrespondierenden Aufnahmeöffnung.

Wie vorangehend erwähnt, werden bspw. die Aufnahmeöffnungen in dieselbe Richtung in den Profilträger eingelassen, wie die Grundbohrungen, nämlich in Richtung der Dicke des Profilträgers. Dies kann dahingehend vorteilhaft sein, als dass bspw. ein unter Last stehendes Sperrmittel keine direkten Normalkräfte auf die Befestigung der Funktionsleiste, also bspw. Schrauben in den Grundbohrungen, ausüben kann. Es können dann also im Regelfall lediglich Anteile eines entsprechenden Moments in Normalrichtung wirken. Gemäß einer weiteren bevorzugten Ausführungsform sind die Aufnahmeöffnungen in einer ersten Ebene, und die Grundbohrungen in einer zweiten Ebene angeordnet, wobei die erste Ebene parallel zur zweiten Ebene verläuft. Dies bezieht sich insbesondere auf solche zwei Ebenen in denen jeweils entsprechend der Querschnitt der Grundbohrung bzw. der Aufnahmeöffnung angeordnet ist. Die Richtung der Dicke des Profilträgers ist entsprechend besonders bevorzugt orthogonal zu den vorgenannten Ebenen ausgerichtet.

Überdies können die Sicherheit und die Belastbarkeit der Funktionsleiste im montierten Fall entsprechend den vorangehend getroffenen Maßnahmen zur vorteilhaften Ebenenausrichtung weiter erhöht werden, indem gemäß einer weiteren bevorzugten die von dem Fußabschnitt und den eingreifenden Kopplungselementen der entsprechenden Verbindungsabschnitte ausgebildete Grundfläche im Wesentlichen parallel zur ersten und zur zweiten Ebene ausgerichtet ist.

Zur Verbindung des Leuchtmittelträgers mit dem Profilträger kann es vorteilhaft sein, wenn die Verbindungsmittel und das Kopplungselement durchgehend über die maßgebliche Dimension der Funktionsleiste, nämlich der Länge, miteinander in Eingriff stehen. Gemäß einer weiteren bevorzugten Ausführungsform sind die Verbindungsmittel daher als Nuten ausgebildet, wobei sich der Öffnungsquerschnitt der Nuten mit zunehmender Nuttiefe aufweitet. Bevorzugt ist in die Rückseite des Profilträgers eine Nut parallel zur Längsachse und besonders bevorzugt über im Wesentlichen die vollständige Länge des Profilträgers eingelassen. Es ist bevorzugt jeweils beidseitig und gleichmäßig beabstandet von der Mittelachse des Profilträgers jeweils eine Nut von der Rückseite in Richtung der Oberseite eingelassen. Die Nuttiefe ist dabei parallel zur Dicke des Profilträgers ausgerichtet.

Die Nut weist bevorzugt in einer Querschnittansicht entlang der Längsachse einen im Wesentlichen trapezförmigen Querschnitt auf, wobei die durch die Nuttiefe entsprechend beabstandeten Eingangs und Endfläche parallel sind und die Seitenflächen entsprechend wie vorangehend beschrieben mit zunehmender Nuttiefe auseinander divergieren.

Um eine einfache und zugleich sichere Verbindung des Kopplungselements mit einer solchen Nut zu ermöglichen kann es vorteilhaft sein, wenn sich das Kopplungselement an die besondere Form der Nut anschmiegt. Gemäß einer weiteren bevorzugten Ausführungsform sind die Kopplungselemente daher derart ausgebildet, dass diese zur formschlüssigen, insbesondere zur selbsthemmenden Verbindung mit den Verbindungsmitteln ausgebildet sind. So kann das Kopplungselement bspw. ein von einer Basisfläche abstehendes Federelement aufweisen, welches einen in die vorgenannte trapezförmige Nut formgenau hineinpasst. Ein solches Federelement könnte also besonders bevorzugt v-förmig, so mit zwei fühlerartigen Stiften ausgebildet sein, welche in einem Winkel auseinanderspreizen der im Wesentlichen der Flankensteilheit der divergierenden Seitenflächen der trapezförmigen Nut im Profilträger entspricht. Diese v-förmig angeordneten fühlerartigen Stifte können zudem besonders bevorzugt abschnittsweise eine summierte Breite aufweisen, welche größer ist, als die Breite des Öffnungsquerschnitts in der o.g. Ansicht, so dass ein Entgleiten des Kopplungselements aus der Nut in Richtung der Dicke des Profilträgers aus selbsthemmenden Gründen nicht möglich ist. Entsprechend wird der Leuchtmittelträger dann wiederum besonders bevorzugt mit dem Kopplungselement in eine solche Nut als Verbindungsmittel parallel zur Längsachse eingeschoben.

Es ist zudem möglich, dass die Leuchtmittelträger gegen ein Ausrutschen parallel zur Längsachse jeweils endseitig durch eine Endkappe gesichert werden, wobei bereits die Haftreibung für einen festen Sitz sorgen kann. Zudem können in zumindest einer Endkappe elektrotechnische Mittel zur Versorgung und/oder Steuerung von in den Leuchtmittelabschnitten angeordneten Leuchtmitteln angeordnet sein. Dies können zum einen bspw. Stecker und Buchsen zur Stromversorgung und zum anderen bspw. Sender/Empfänger Einheiten zur insbesondere drahtlosen Kommunikation mit einer Kontrolleinheit sein. Für Stecker und Buchsen können zudem entsprechende Schnittstellen und/oder Mittel zur Kabelverlängerung vorgesehen sein. Sind die Leuchtmittel bspw. als LED-Leuchtstreifen ausgebildet, so könnte die vorgenannte Kontrolleinheit bspw. neben Ein/Aus-Signalen, Einfluss auf die Bestromung bzgl. der Leuchtstärke oder aber auch Einfluss auf Leuchtfarbe und/oder Leuchtmuster nehmen.

Die vorgenannte Haftreibung kann entsprechend durch eine geeignete Wahl der Werkstoffe begünstigt werden. Während für den Profilträger insbesondere metallische Werkstoffe, hochfeste Kunststoffe o.ä. in Frage kommen, welche bspw. zum Strangpressen geeignet sind, können die Leuchtmittelträger bevorzugt aus einem Kunststoff bspw. im Spritz- oder Druckgussverfahren, oder aber auch durch Extrusion erzeugt werden. Da jedoch bspw. Laderauminnenflächen nicht stets eben sind und somit die Montage einer starren Funktionsleiste insbesondere in einem mit Deckenspriegeln durchzogenen Deckenbereich eines Laderaums kompliziert sein kann, werden Profilträger und/oder Leuchtmittelträger aus einem elastisch verformbaren Werkstoff gefertigt. Besonders bevorzugt werden die Leuchtmittelträger aus einem widerstandsfähigen und zugleich elastischen Kunststoff gefertigt welcher zugleich weitestgehend lichtdurchlässig ist. Damit kann eine vorbildliche Ausleuchtung eines entsprechenden Laderaums sichergestellt werden.

Es kann zudem vorteilhaft sein, die Art der Verbindung von Kopplungselement und Verbindungsmittel einfach und kostengünstig zu halten, insbesondere dann, wenn im Einsatz mit nur geringer mechanischer Beanspruchung der Funktionsleiste zu rechnen ist. Gemäß einer weiteren bevorzugten Ausführungsform sind die Verbindungsmittel und das Kopplungselement daher als Magnetelemente ausgebildet und der Leuchtmittelträger ist entsprechend auf magnetische Weise mit dem Profilträger verbunden. Es können jeweils im Profilträger und im Leuchtmittelträger Ausnehmungen angeordnet werden, welche zur Aufnahme entsprechender Magnetelemente, bspw. jeweils in einer Nut entlang der Länge der vorgenannten Träger oder jeweils nur abschnittsweise. Es ist ebenfalls denkbar, dass die Magnetelemente jeweils ein- und/oder angeklebt werden.

Ein Ausführungsbeispiel der Erfindung wird nachstehend mit Bezug Figuren erläutert. Die Figuren zeigen:
- Fig. 1: eine perspektivische Ansicht einer erfindungsgemäßen Funktionsleiste;
- Fig. 2: eine Schnittansicht quer zur Schnittachse X der Funktionsleiste aus Fig. 1;
- Fig. 3: eine Schnittansicht quer zur Schnittachse Y der Funktionsleiste aus Fig. 1;
- Fig. 4: einen Querschnitt durch eine Funktionsleiste mit Endkappe mit profilierter Grundfläche gemäß einer Ausführungsform;
- Fig. 5: einen Querschnitt durch eine Funktionsleiste mit Endkappe mit profilierter Grundfläche gemäß einer weiteren Ausführungsform.

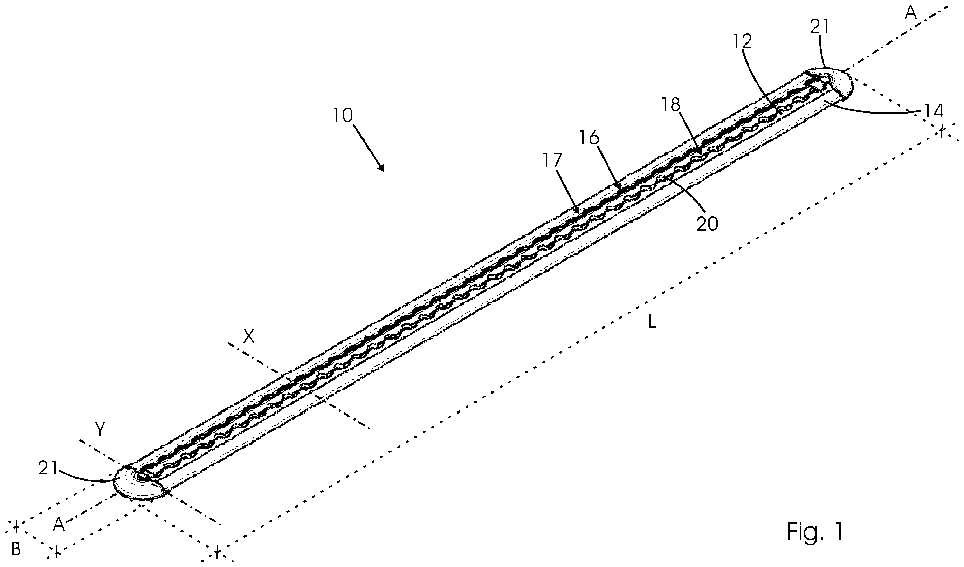

Fig. 1 zeigt beispielhaft eine Funktionsleiste 10 mit einem Profilträger 12 und zwei Leuchtmittelträgern 14. Profilträger 12 und Leuchtmittelträger 14 erstrecken sich gerade entlang einer Längsachse A und weisen jeweils eine Länge L auf. Die Leuchtmittelträger 14 sind an den Seiten quer zur Längsachse A mit dem Profilträger 12 verbunden. An den durch die Länge L beabstandeten Enden des Profilträgers 12 sind Endkappen 21 angeordnet.

Der Profilträger 12 weist eine Oberseite 22 und eine hier nicht einsehbare Rückseite 24 auf. In der Oberseite 22 weist der Profilträger 12 entlang der Längsachse A eine Mehrzahl voneinander beabstandeter ovaler Aufnahmeöffnungen 16 auf. Diese sind durch Ausnehmungen 17 miteinander durchgängig verbunden. Die Aufnahmeöffnungen 16 weisen zudem eine Hinterschneidung 18 auf. Am Grund dieser Hinterschneidung 18 sind eine Mehrzahl von Grundbohrungen 20 angeordnet. Die Grundbohrungen 20 verbindend weist der Profilträger zudem am Grund der Hinterschneidung 18 eine Grundnut N auf. Die Grundnut N ist parallel zur Längsachse A ausgerichtet. Die Grundnut N weist einen v-förmigen Querschnitt auf.

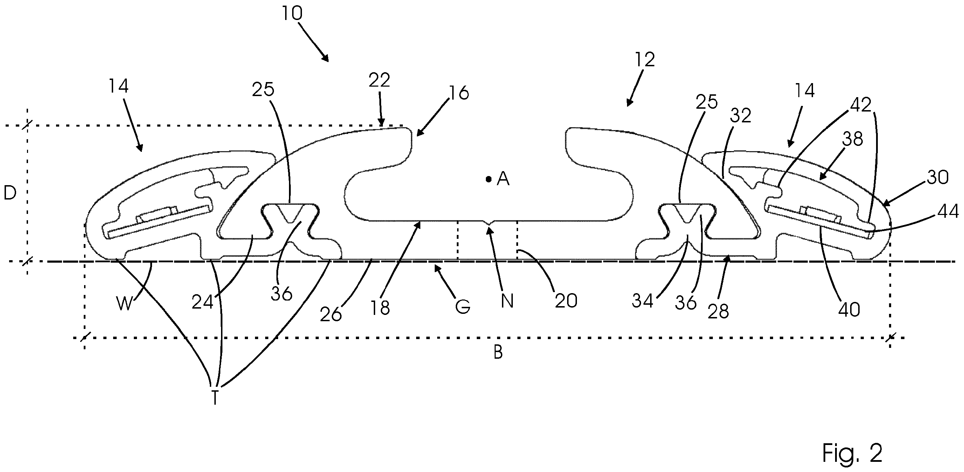

Fig. 2 illustriert die Verbindung des Profilträgers 12 mit den beiden Leuchtmittelträgern 14 in einem Querschnitt quer zur Längsachse A entlang der Schnittachse Q gemäß Fig. 1.

Wie Fig. 2 beispielhaft zeigt, weist die Oberseite 22 des Profilträgers 12 eine gebogene Form auf. Die Oberseite 22 geht dabei seitlich direkt in die Rückseite 24 über. In der Rückseite 24 weist der Profilträger 12 überdies zwei Längsnuten 25 mit jeweils trapezförmigem Querschnitt auf. Aus der Rückseite 24 ragt von der Hinterschneidung 18 weg ein Fußabschnitt 26 hervor. Der Abstand zwischen dem Ende des Fußabschnitts 26 und dem Bereich in welchem die Oberseite 22 die Aufnahmeöffnungen 16 aufweist, kann als Dicke D des Profilträgers Die Dicke D ist richtungsmäßig quer zur Längsachse A ausgerichtet. Die maximale Ausprägung in Richtung quer zur Dicke D und quer zur Längenachse A kann als Breite B angesehen werden.

Der Fußabschnitt 26 weist eine oberflächliche Struktur auf, ist jedoch im Wesentlichen als eben anzusehen. Die Grundbohrungen 20 durchdringen ausgehend von dem Grund der Hinterschneidung sowohl die Rückseite 24, als auch den Fußabschnitt 26. Die Grundbohrungen 20 weisen ein hier nicht dargestelltes Gewinde auf und können entsprechend genutzt werden, um die Funktionsleiste 10 an einer bspw. Fläche anzuschrauben.

Wie Fig. 2 zudem illustriert, setzen sich die Leuchtmittelträger 14 jeweils aus einem Verbindungsabschnitt 28 und einem Leuchtmittelabschnitt 30 zusammen. Der Verbindungsabschnitt weist jeweils eine Anlagefläche 32 und ein Kopplungselement 34 auf. An dem Kopplungselement 34 ist zudem jeweils ein Federelement 36 angeordnet. Die Federelemente 36 sind als v-förmig angeordnete fühlerartige Stifte ausgebildet.

Das untere Ende des Fußabschnitts 26 und die Unterseite des Kopplungselements 34 kann als Grundfläche G des Profilträgers 12 angesehen werden. Diese ist im Wesentlichen eben ausgebildet und steht im Kontakt mit derjenigen Fläche, an welcher die Funktionsleiste 10 montiert wird. Eine solche Fläche ist u.a. in Fig. 2 als Wandfläche W dargestellt. Neben der Grundfläche G ist dabei die Funktionsleiste 10 auch mit Teilen des Leuchtmittelträgers 14 an der Wandfläche W abgestützt. Die Leuchtmittelträger 14 weisen jeweils Teilflächen T auf, welche wie in Fig. 2 im Wesentlichen in einer Ebene mit der Grundfläche G liegen und welche in der Summe eine unterbrochene Kontaktfläche der Leuchtmittelträger 14 mit der Wandfläche W ausbilden. Die Leuchtmittelträger 14 weisen hier jeweils drei Teilflächen T auf. In anderen Varianten ist es jedoch durchaus möglich, dass die Leuchtmittelträger 14 eine bspw. anders geformte Wandfläche W an mehr oder weniger Stellen kontaktieren. Ebenso ist es möglich, dass die Leuchtmittelträger 14 derart gestaltet werden, dass sie zusätzliche Teilflächen oder sogar nur eine durchgehende Kontaktfläche aufweisen.

Die Leuchtmittelabschnitte 30 weisen jeweils einen an die Anlagefläche 32 angrenzenden Innenraum 38 auf. Diese weisen jeweils eine Grundfläche 40 auf, welche jeweils winklig von dem Profilträger 12 weg gerichtet ist. Wie Fig. 2 weiter illustriert, ist auf der Grundfläche 40 jeweils ein LED-Streifen 44 angeordnet, welche zudem von in den Innenräumen 38 angeordneten Haltenasen 42 gehalten werden. Damit sind die LED-Streifen 44 im Wesentlichen gegen Rotation und ebenfalls im Wesentlichen gegen eine Bewegung in eine Richtung gesichert, welche Komponenten in Richtung der Dicke D und/oder der Breite B aufweisen.

Um einen sicheren Halt zu gewährleisten, liegen die Leuchtmittelträger 14 einerseits formschlüssig mit der jeweiligen Anlagefläche 32, sowie einem Teil des entsprechenden Kopplungselements 34 an Ober- und Rückseite 22, 24 des Profilträgers 12 an. Der Verbindungsabschnitt 28 umgreift den Profilträger 12 jeweils von der Seite, also in Richtung der Breite B über die gesamte Länge L. Andererseits stehen die Kopplungselemente 34 mit ihren Federelementen 36 in Eingriff mit den Längsnuten 25 (Fig. 2).

Die flächige Anlage verhindert ein einfaches Entgleiten der Leuchtmittelträger 14 in Richtung der Längsachse A aus den Längsnuten 25 aufgrund von Haftreibung. Die Leuchtmittelträger 14 bestehen aus einem lichtdurchlässigen Polymer, während der Profilträger aus einem Aluminiumverbund hergestellt werden. Dementsprechend ergibt sich bei flächiger Anlage zwischen diesen beiden Werkstoffen eine hohe Haftreibung.

Die fühlerartig ausgebildeten Stifte der Federelemente 36 liegen an den divergierenden Seitenflächen der trapezförmigen Längsnuten 25 an. Der Eingangsquerschnitt der Längsnuten 25 an der Rückseite 24 ist dabei schmaler als die summierte Breite der vorgenannten fühlerartigen Stifte. Damit wird besonders effizient ein Ablösen des entsprechenden Leuchtmittelträgers 14 insbesondere in Richtung der Dicke D, aber auch in Richtung der Breite B verhindert.

Die Verbindungsabschnitte 28 sind insbesondere im Bereich der Auskehlung, also an der Stelle, wo die Anlage des Kopplungselements 34 an der Rückseite 24 des Profilträgers 12 in die Anlage der Anlagefläche 32 an der Oberseite 22 des Profilträgers 12 übergeht, von ausreichender Materialstärke bzw. Steifigkeit, dass das Gewicht des Leuchtmittelabschnitts 30 den Leuchtmittelträger 14 ungleich der Ausrichtung der Funktionsleiste 10 nicht absacken lässt.

Die LED-Streifen 44 wurden in ihre Halterungen, welche wie vorgenannt jeweils durch die Grundfläche 40 und die entsprechenden Haltenasen 42 ausgebildet sind, parallel zur Längsachse A eingeschoben.

Wie Fig. 1 darstellt, ist die Funktionsleiste 10 endseitig hinsichtlich der Längsachse A mit Endkappen 21 versehen. Die Endkappen 21versiegeln die Innenräume 38, so dass im Betrieb kein Ausrutschen der LED-Streifen 44 parallel zur Längsachse möglich ist. Die Endkappen 21 sind jedoch leicht und dabei zerstörungsfrei entfernbar, so dass eine Wartung und Austausch der LED-Streifen 44 leicht möglich sind. Eine Demontage der Funktionsleiste 10 ist dabei entsprechend nicht notwendig.

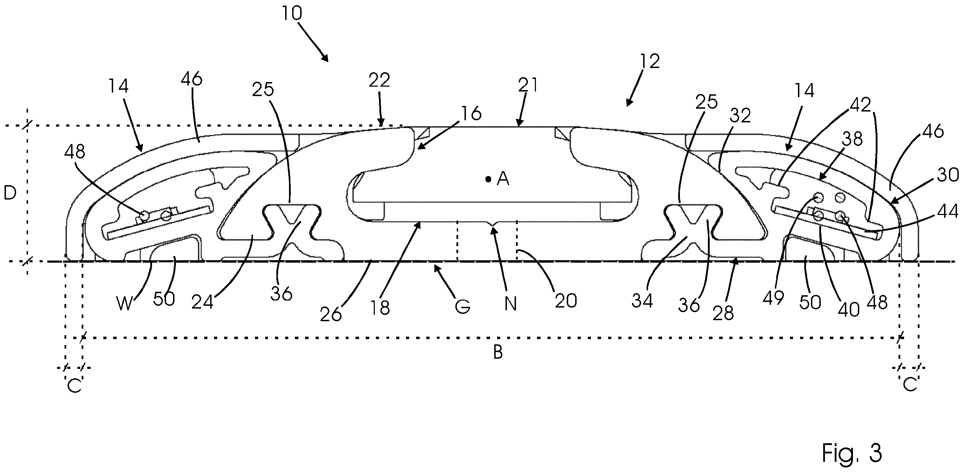

Fig. 3 zeigt wie Fig. 2 einen Querschnitt der Funktionsleiste 10, jedoch in dem vorgenannten endseitigen Bereich, in welchem entsprechend eine Endkappe 21 auf der Funktionsleiste 10 aufgeschoben ist. Fig. 3 illustriert, dass die Endkappe 21 sowohl den Profilträger 12, als auch den Leuchtmittelträger 14 umschließt. Die Endkappe 21 weist einen Abschnitt auf, welcher den Leuchtmittelabschnitt 30 als Außenhülle 46 überdeckt. Die Außenhülle 46 ist entsprechend aus einem transparenten Kunststoff gefertigt. Die Außenhülle 46 ummantelt den Leuchtmittelabschnitt 30 derart, dass die Außenhülle 46 diesen jeweils von der Oberseite 22 des Profilträgers formfolgend bis zur Wandfläche W, also bis in die Ebene der Grundfläche G, überdeckt. Die Außenhülle 46 weist eine im Wesentlichen konstante dicke C auf.

Fig. 3 illustriert weiter, dass die Endkappe 21 den Leuchtmittelabschnitt 30 zudem von unten mittels einer Unterfütterung 50 abstützt. Damit werden Form und Ausrichtung des gesamten Leuchtmittelträgers 14 unterstützt, was zudem dazu beiträgt, eine Änderung der Abstrahlrichtung der LED-Streifen 44 zu verhindern.

Schließlich zeigt Fig. 3, dass die LED-Streifen 44 Verbindungskabel 48 aufweisen. Über diese Verbindungskabel 48 sind die LED-Streifen 44 miteinander verbunden (hier nicht dargestellt). Auf der einen Seite ist im Bereich des Leuchtmittelabschnitts 30 zudem ein paar Versorgungskabel 49 angeordnet, über welche die LED-Streifen 44 über ein hier nicht dargestelltes und ebenfalls in der Endkappe 21 angeordnetes Netzteil mit Strom versorgt werden.

Die Funktionsleiste 10 eignet sich besonders zur Montage an nicht regelmäßigen bzw. ganz besonders an gerundeten Oberflächen. Dazu sind Profilträger 12 und Leuchtmittelträger 14 jeweils aus einem wie o.g. Aluminiumverbund bzw. Polymer gefertigt, welche jeweils eine vergleichsweise hohe elastische Verformbarkeit aufweisen.

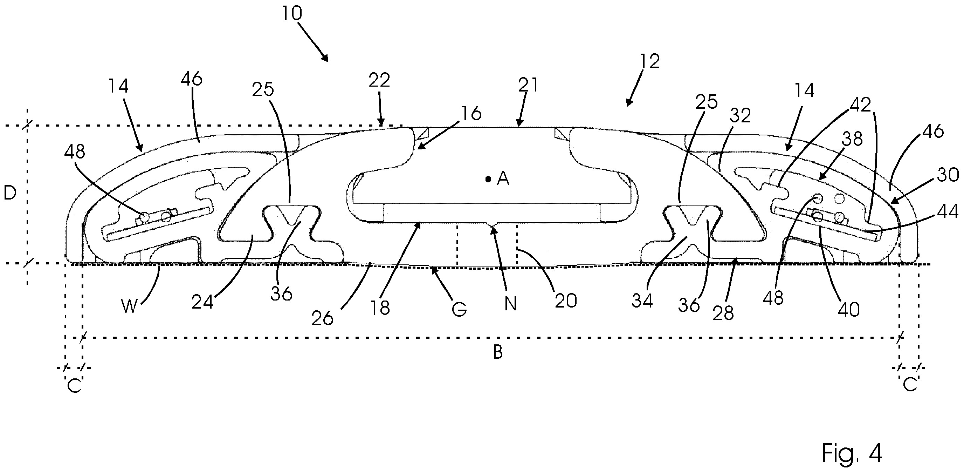

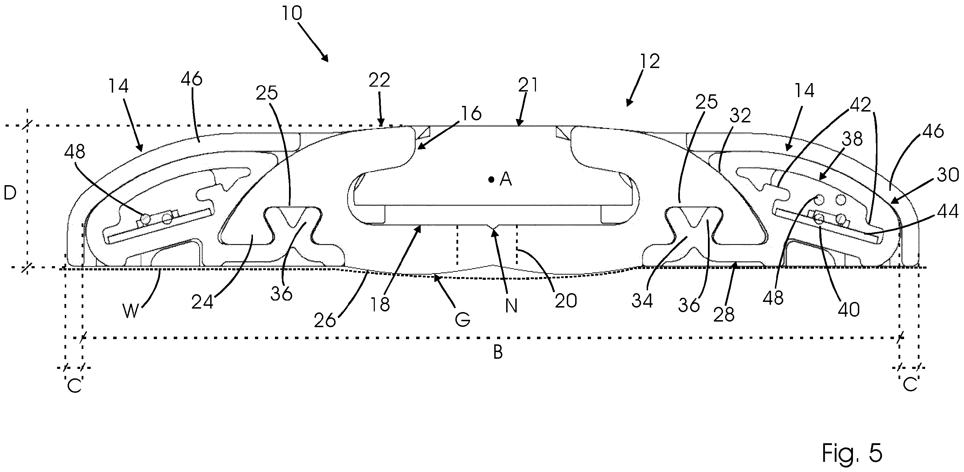

Die Fig. 4 und 5 illustrieren in dem Zusammenhang, dass es überdies möglich ist, Form der Grundfläche G des Profilträgers 12 an die Ausgestaltung einer nicht vollständig ebenen Wandfläche W anzupassen. Fig. 4 zeigt eine einteilig konvexe Ausformung der Grundfläche G, während Fig. 5 eine zweiteilig jeweils konvexe Ausformung der Grundfläche G zeigt.

Verschiedene Ausformungen können insbesondere hinsichtlich einer erhöhten Stabilität der Funktionsleiste 10 an einen individuell geformten Untergrund angepasst werden. Es ist auch bspw. denkbar, dass in anderen Ausführungsformen die Grundfläche G nicht rund ausgeformt ist, sondern bspw. sägezahnartig. Ist eine runde Ausformung bevorzugt, so kann es zudem durchaus vorteilhaft sein, eine Gestaltungsart zu wählen, bei welchem sich die Grundfläche in einer Querschnittsansicht aus einer Vielzahl an Teilkreisen mit kleinen Radien zusammensetzt.

Somit kann die Funktionsleiste 10 generell an Rundungen bzw. Unregelmäßigkeiten hinsichtlich der Beschaffenheit einer Montagefläche angepasst und entsprechend deutlich belastbarer über die Grundbohrungen 20 mit dieser verbunden werden. Bei unregelmäßig geformten Montageflächen kann über die Ausgestaltung der Grundfläche G so neben dem durch die Verschraubung aufgeprägten Kraftschluss ein zumindest annähernder Formschluss erreicht werden. Die vorgenannten Ausformungen lassen sich jedoch zugleich besonders einfach herstellen, so dass gegenüber Lösungen, bei welchem die geometrische Beschaffenheit einer Montagefläche vollständig nachgeformt wird, eine deutliche Kostenersparnis möglich ist.

### Bezugszeichenliste

| | | | |
|---|---|---|---|
| 10 | Funktionsleiste | X | erste Schnittachse |
| 12 | Profilträger | Y | zweite Schnittachse |
| 14 | Leuchtmittelträger | | |
| 16 | Aufnahmeöffnung | | |
| 17 | Ausnehmung | | |
| 18 | Hinterschneidung | | |
| 20 | Grundbohrung | | |
| 21 | Endkappe | | |
| 22 | Oberseite | | |
| 24 | Rückseite | | |
| 25 | Längsnut | | |
| 26 | Fußabschnitt | | |
| 28 | Verbindungsabschnitt | | |
| 30 | Leuchtmittelabschnitt | | |
| 32 | Anlagefläche | | |
| 34 | Kopplungselement | | |
| 36 | Federelement | | |
| 38 | Innenraum | | |
| 40 | Grundfläche | | |
| 42 | Haltenase | | |
| 44 | LED-Streifen | | |
| 46 | Außenhülle | | |
| 48 | Verbindungskabel | | |
| 49 | Versorgungskabel | | |
| 50 | Unterfütterung | | |
| A | Längsachse | | |
| B | Breite | | |
| D | Dicke | | |
| G | Grundfläche | | |
| L | Länge | | |
| N | Grundnut | | |

## Patentansprüche

1. Funktionsleiste (10) zur Anordnung an Laderauminnenflächen eines Kraftfahrzeugs, mit einem
- Profilträger (12), mit einem Anschlussabschnitt und einer abschnittsweise zur Abstützung an der Laderauminnenfläche ausgebildeten Rückseite (24), wobei
- der Anschlussabschnitt zur Anordnung von Sperrmitteln für die Ladungssicherung ausgebildet ist, und
- der Profilträger (12) zusätzlich Verbindungsmittel (25) zur Verbindung mit einem Leuchtmittelträger (14) aufweist,
**dadurch gekennzeichnet, dass**
- die Funktionsleiste (10) mindestens einen Leuchtmittelträger (14) zur Anordnung von Leuchtmitteln (44) aufweist, mit einem Leuchtmittelabschnitt (30) zur Aufnahme von zumindest einem Leuchtmittel (44), sowie einen Verbindungsabschnitt (28) mit zumindest einem Kopplungselement (34) und einer Abstützung, wobei
- die Abstützung des Leuchtmittelträgers (14) an zumindest einem Teil des Profilträgers (12) anliegt, und das entsprechende an dem Verbindungsabschnitt (28) angeordnete Kopplungselement (34) derart mit dem Profilträger (12) in Wirkverbindung befindlich ist, dass das Kopplungselement (34) mit den Verbindungsmitteln (25) den Leuchtmittelträger (14) an den Profilträger (12) lösbar festlegt.

2. Funktionsleiste (10) nach Anspruch 1, **dadurch gekennzeichnet, dass** der Leuchtmittelträger (14) zur Abstützung eine Anlagefläche (32) aufweist, an welcher zumindest ein Teil des Profilträgers (12), insbesondere formfolgend, anliegt.

3. Funktionsleiste nach einem oder mehreren der vorangehenden Ansprüche, **dadurch gekennzeichnet, dass** das Kopplungselement (34) als sich von dem Verbindungsabschnitt (28) weg erstreckend und zumindest ein Verbindungsmittel (25) als dazu korrelierende Ausnehmung in dem Profilträger (12) ausgebildet sind, so dass das Kopplungselement (34) mit zumindest einem Verbindungsmittel (25) in Eingriff steht.

4. Funktionsleiste (10) nach einem oder mehreren der vorangehenden Ansprüche, **dadurch gekennzeichnet, dass** die Verbindungsmittel (25) in der Rückseite des Profilträgers (12) angeordnet sind und der Verbindungsabschnitt (28) den Profilträger (12) zumindest im Bereich des Kopplungselements (34) derart untergreift, dass das Kopplungselement (34) mit dem Verbindungsmittel (25) im Eingriff befindlich ist.

5. Funktionsleiste (10) nach einem oder mehreren der vorangehenden Ansprüche, **dadurch gekennzeichnet, dass** der Leuchtmittelabschnitt (30) des Leuchtmittelträgers (14) zur Aufnahme zumindest eines als Leuchtmittel ausgebildeten Leuchtmittelstreifens (44) als Hohlprofil ausgebildet ist.

6. Funktionsleiste (10) nach Anspruch 5, **dadurch gekennzeichnet, dass** der Leuchtmittelabschnitt (30) des Leuchtmittelträgers (14) zur lösbaren Arretierung der Leuchtmittelstreifen (44) ausgebildete Haltemittel (42), insbesondere Rastvorsprünge (42), aufweist.

7. Funktionsleiste (10) nach Anspruch 5 oder 6, **dadurch gekennzeichnet, dass** die Leuchtmittelstreifen (44) in dem Leuchtmittelabschnitt (30) winklig angeordnet sind.

8. Funktionsleiste (10) nach einem oder mehreren der vorangehenden Ansprüche, **dadurch gekennzeichnet, dass** die Oberseite (22) des Profilträgers (12) und die entsprechende Abstützung des Leuchtmittelträgers (14) bogenförmig ausgebildet sind.

9. Funktionsleiste (10) nach einem oder mehreren der vorangehenden Ansprüche, **dadurch gekennzeichnet, dass** der Profilträger (12) einen an die Rückseite (24) angrenzenden Fußabschnitt (26) aufweist, der mit den in Eingriff befindlichen Kopplungselementen (34) der Verbindungsabschnitte (28) der anliegenden Leuchtmittelträger (14) eine im Wesentlichen ebene Grundfläche (G) ausbildet.

10. Funktionsleiste (10) nach Anspruch 9, **dadurch gekennzeichnet, dass**
- der Anschlussabschnitt zur Anordnung von Sperrmitteln ausgebildete Aufnahmeöffnungen (16) aufweist, wobei
- die Aufnahmeöffnung (16) eine als Hinterschneidung (18) ausgebildete Längsnut aufweisen, und wobei
- im Bereich einer jeweiligen Aufnahmeöffnung (16) zumindest eine dazu korrespondierende, und auch den Fußabschnitt (26) durchdringende Grundbohrung (20) in der Längsnut angeordnet ist.

11. Funktionsleiste (10) nach Anspruch 10, **dadurch gekennzeichnet, dass** die Aufnahmeöffnungen (16) in einer ersten Ebene, und die Grundbohrungen (20) in einer zweiten Ebene angeordnet sind, wobei die erste Ebene parallel zur zweiten Ebene verläuft.

12. Funktionsleiste (10) nach einem der Ansprüche 9,10 oder 11, **dadurch gekennzeichnet, dass** die von dem Fußabschnitt (26) und den eingreifenden Kopplungselementen (34) der entsprechenden Verbindungsabschnitte (28) ausgebildete Grundfläche (G) im Wesentlichen parallel zur ersten und zur zweiten Ebene ausgerichtet sind.

13. Funktionsleiste (10) nach einem oder mehreren der vorangehenden Ansprüche, **dadurch gekennzeichnet, dass** die Verbindungsmittel (25) als Nuten ausgebildet sind, wobei sich der Öffnungsquerschnitt der Nuten mit zunehmender Nuttiefe aufweitet.

14. Funktionsleiste (10) nach einem oder mehreren der vorangehenden Ansprüche, **dadurch gekennzeichnet, dass** die Kopplungselemente (34) derart ausgebildet sind, dass diese zur formschlüssigen, insbesondere zur selbsthemmenden Verbindung mit den Verbindungsmittel (25) ausgebildet sind.

15. Funktionsleiste (10) nach einem oder mehreren der vorangehenden Ansprüche, **dadurch gekennzeichnet, dass** Profilträger (12) und/oder Leuchtmittelträger (14) aus einem elastisch verformbaren Werkstoff gefertigt werden.

16. Funktionsleiste (10) nach einem oder mehreren der vorangehenden Ansprüche, **dadurch gekennzeichnet, dass** das Kopplungselement (34) und die Verbindungsmittel (25) als Magnetelemente ausgebildet sind und der Leuchtmittelträger (14) entsprechend auf magnetische Weise mit dem Profilträger (12) verbunden ist.

## Claims

1. Functional bar (10) for arrangement on interior load compartment areas of a motor vehicle, with a
- profile beam (12), with a connecting section and a rear side (24) formed in sections for support on the interior load compartment area, wherein
- the connecting section is designed for the arrangement of blocking means for securing the load, and
- the profile beam (12) additionally has connecting means (25) for connection to an illuminant carrier (14),
**characterized in that**
- the functional bar (10) has at least one illuminant carrier (14) for the arrangement of illuminants (44), with an illuminant section (30) for receiving at least one illuminant (44), and a connecting section (28) with at least one coupling element (34) and a support, wherein
- the support of the illuminant carrier (14) bears against at least one part of the profile beam (12), and the corresponding coupling element (34) arranged on the connecting section (28) is operatively connected to the profile beam (12) in such a way that the coupling element (34) with the connecting means (25) detachably secures the illuminant carrier (14) to the profile beam (12).

2. Functional bar (10) according to claim 1, **characterized in that** the illuminant carrier (14) has a contact surface (32) for support, against which at least a part of the profile beam (12) rests, in particular in a shape-following manner.

3. Functional bar according to one or more of the preceding claims, **characterized in that** the coupling element (34) is designed as extending away from the connecting section (28) and at least one connecting means (25) is designed as a recess in the profile beam (12) correlating thereto, so that the coupling element (34) is in engagement with at least one connecting means (25).

4. Functional bar (10) according to one or more of the preceding claims, **characterized in that** the connecting means (25) are arranged in the rear side of the profile beam (12) and the connecting section (28) engages under the profile beam (12) at least in the region of the coupling element (34) in such a way that the coupling element (34) is in engagement with the connecting means (25).

5. Functional bar (10) according to one or more of the preceding claims, **characterized in that** the illuminant section (30) of the illuminant carrier (14) is designed as a hollow profile for receiving at least one illuminant strip (44) designed as an illuminant.

6. Functional bar (10) according to claim 5, **characterized in that** the illuminant section (30) of the illuminant carrier (14) has retaining means (42), in particular latching projections (42), formed for releasable locking of the illuminant strips (44).

7. Functional bar (10) according to claim 5 or 6, **characterized in that** the illuminant strips (44) are arranged at an angle in the illuminant section (30).

8. Functional bar (10) according to one or more of the preceding claims, **characterized in that** the top side (22) of the profile beam (12) and the corresponding support of the illuminant carrier (14) are of arcuate design.

9. Functional bar (10) according to one or more of the preceding claims, **characterized in that** the profile beam (12) has a base section (26) which adjoins the rear side (24) and forms a substantially flat base surface (G) with the engaging coupling elements (34) of the connecting sections (28) of the adjacent illuminant carriers (14).

10. Functional bar (10) according to claim 9, **characterized in that**
- the connecting section has receiving openings (16) formed for the arrangement of blocking means, wherein
- the receiving opening (16) has a longitudinal groove formed as an undercut (18), and wherein
- in the region of a respective receiving opening (16) and corresponding thereto at least one base hole (20) and also penetrating the base section (26) is arranged in the longitudinal groove.

11. Functional bar (10) according to claim 10, **characterized in that** the receiving openings (16) are arranged in a first plane and the base holes (20) are arranged in a second plane, the first plane running parallel to the second plane.

12. The functional bar (10) according to any one of claims 9, 10 or 11, **characterized in that** the base surface (G) formed by the base section (26) and the engaging coupling elements (34) of the corresponding connecting sections (28) are oriented substantially parallel to the first and to the second plane.

13. Functional bar (10) according to one or more of the preceding claims, **characterized in that** the connecting means (25) are designed as grooves, the opening cross-section of the grooves widening with increasing groove depth.

14. Functional bar (10) according to one or more of the preceding claims, **characterized in that** the coupling elements (34) are designed in such a way that they are designed for positive, in particular self-locking, connection to the connecting means (25).

15. Functional bar (10) according to one or more of the preceding claims, **characterized in that** profile beams (12) and/or illuminant carriers (14) are made of an elastically deformable material.

16. Functional bar (10) according to one or more of the preceding claims, **characterized in that** the coupling element (34) and the connecting means (25) are designed as magnetic elements and the illuminant carrier (14) is connected to the profile beam (12) in a correspondingly magnetic manner.

## Revendications

1. Barre fonctionnelle (10) pour l'agencement sur la surface intérieure de l'espace de chargement d'un véhicule automobile, avec
- une poutre profilée (12), avec une section de raccordement et une face arrière (24) formée en sections pour le soutien sur la surface intérieure de l'espace de chargement, dans laquelle
- la section de raccordement est conçue pour la mise en place de moyens de blocage pour sécuriser la charge, et
- la poutre profilée (12) comporte en outre des moyens de connexion (25) pour la connexion à un support de moyen d'éclairage (14),
**caractérisé par le fait que**
- la barre fonctionnelle (10) comporte au moins un support de moyen d'éclairage (14) pour l'agencement d'éclairages (44), avec une section d'éclairage (30) pour recevoir au moins un éclairage (44), et une section de connexion (28) avec au moins un élément de couplage (34) et un support, dans laquelle
- le support de moyen d'éclairage (14) s'appuie sur au moins une partie de la poutre profilée (12), et l'élément de couplage (34) correspondant disposé sur la section de connexion (28) est relié de manière opérationnelle à la poutre profilée (12) de telle sorte que l'élément de couplage (34) avec le moyen de connexion (25) fixe de manière amovible le support de moyen d'éclairage (14) à la poutre profilée (12).

2. Barre fonctionnelle (10) selon la revendication 1, **caractérisée par le fait que** le support de moyen d'éclairage (14) présente une surface d'appui (32) pour le soutien sur laquelle repose au moins une partie de la poutre profilée (12), en particulier en suivant la forme.

3. Barre fonctionnelle selon l'une ou plusieurs des revendications précédentes, **caractérisée par le fait que** l'élément de couplage (34) est conçu comme s'étendant à l'écart de la section de connexion (28) et qu'au moins un moyen de connexion (25) est conçu comme une échancrure dans la poutre profilée (12) en corrélation avec celle-ci, de sorte que l'élément de couplage (34) est en prise avec au moins un moyen de connexion (25).

4. Barre fonctionnelle (10) selon l'une ou plusieurs des revendications précédentes, **caractérisée par le fait que** les moyens de connexion (25) sont disposés dans la face arrière de la poutre profilée (12) et que la section de connexion (28) s'engage sous la poutre profilée (12) au moins dans la zone de l'élément de couplage (34) de telle sorte que l'élément de couplage (34) est en prise avec les moyens de connexion (25).

5. Barre fonctionnelle (10) selon l'une ou plusieurs des revendications précédentes, **caractérisée par le fait que** la section d'éclairage (30) du support de moyen d'éclairage (14) est conçue comme un profil creux pour recevoir au moins une bande d'éclairage (44) conçue comme un éclairage.

6. Barre fonctionnelle (10) selon la revendication 5, **caractérisée par le fait que** la section d'éclairage (30) du support de moyen d'éclairage (14) comporte des moyens de retenue (42), en particulier des saillies de verrouillage (42), formées pour le verrouillage amovible des bandes d'éclairage (44).

7. Barre fonctionnelle (10) selon la revendication 5 ou 6, **caractérisée par le fait que** les bandes éclairantes (44) sont disposées en angle dans la section d'éclairage (30).

8. Barre fonctionnelle (10) selon l'une ou plusieurs des revendications précédentes, **caractérisée par le fait que** la face supérieure (22) de la poutre profilée (12) et le support correspondant du support de moyen d'éclairage (14) sont en forme d'arc.

9. Barre fonctionnelle (10) selon l'une ou plusieurs des revendications précédentes, **caractérisée en ce que** le support profilé (12) présente une section de pied (26) adjacente à la face arrière (24), qui forme une surface de base (G) essentiellement plane avec les éléments de couplage (34) en prise des sections de connexion (28) des supports de moyens d'éclairage (14) adjacents.

10. Barre fonctionnelle (10) selon la revendication 9, **caractérisée par le fait que**
- la section de raccordement comporte des ouvertures de réception (16) formées pour l'agencement de moyens de blocage, dans lesquelles
- l'ouverture de réception (16) comporte une rainure longitudinale formée d'une contre-dépouille (18), et dans laquelle
- au moins un trou de base (20) traversant également la section de base (26) est disposé dans la zone d'une ouverture de réception respective (16) et en correspondance avec celle-ci dans la rainure longitudinale.

11. Barre fonctionnelle (10) selon la revendication 10, **caractérisée par le fait que** les ouvertures de réception (16) sont disposées dans un premier plan et les trous de base (20) sont disposés dans un second plan, le premier plan étant parallèle au second plan.

12. La barre fonctionnelle (10) selon l'une des revendications 9, 10 ou 11, **caractérisée par le fait que** la surface de base (G) formée par la section de base (26) et les éléments de couplage (34) s'engageant des parties de connexion (28) correspondantes sont orientées sensiblement parallèlement au premier et au deuxième plan.

13. Barre fonctionnelle (10) selon l'une ou plusieurs des revendications précédentes, **caractérisée par le fait que** les moyens de connexion (25) sont conçus sous forme de rainures, la section d'ouverture des rainures s'élargissant avec l'augmentation de la profondeur des rainures.

14. Barre fonctionnelle (10) selon l'une ou plusieurs des revendications précédentes, **caractérisée par le fait que** les éléments de couplage (34) sont conçus de manière à permettre une connexion positive, en particulier autobloquante, aux moyens de connexion (25).

15. Barre fonctionnelle (10) selon l'une ou plusieurs des revendications précédentes, **caractérisée par le fait que** les poutres profilées (12) et/ou les supports de moyen d'éclairage (14) sont constitués d'un matériau élastiquement déformable.

16. Barre fonctionnelle (10) selon l'une ou plusieurs des revendications précédentes, **caractérisée par le fait que** l'élément de couplage (34) et le moyen de connexion (25) sont conçus comme des éléments magnétiques et que le support de moyen d'éclairage (14) est relié à la poutre profilée (12) d'une manière magnétique correspondante.
